# EUROPEAN PATENT APPLICATION

(11) **EP 4 848 428 A1**
(43) Date of publication of application: **02.12.2026**
(21) Application number: 25803901.5
(22) Date of filing: 08.04.2025
(51) Int. Cl.: H01M 50/213, H01M 50/262, H01M 50/505, H01M 50/593

(54) **BATTERY PACK**

(30) Priority: 16.05.2024 KR 20240063769
(71) Applicant: LG ENERGY SOLUTION, LTD., Seoul 07335 (KR)
(72) Inventor: SEON, Sang Ok, Daejeon 34122 (KR); LEE, Yongseon, Daejeon 34122 (KR)
(74) Representative: Plasseraud IP
(86) International application number: PCT/KR2025/004733
(87) International publication number: WO 2025/239543

(57) **Abstract**

A battery pack according to an embodiment of the present disclosure comprises: a plurality of battery cells extending in one direction, a battery pack frame that forms an internal space for accommodating the plurality of battery cells, and is opened in an upper surface to accommodate the battery cells, and a pressing plate that is movable in an up-and-down direction in the internal space of the battery pack frame, and supports the plurality of battery cells, wherein the plurality of battery cells may be accommodated in parallel to each other in the internal space of the battery pack frame so that the longitudinal direction in which each of the plurality of battery cells extends is orthogonal to the up-and-down direction.

## Description

### [TECHNICAL FIELD]

### Cross-Reference to Related Application(s)

This application claims priority to and the benefit of Korean Patent Application no. KR10-2024-0063769, filed on May 16, 2024, with the Korean Intellectual Property Office, the disclosure of which is hereby incorporated by reference in its entirety.

The present disclosure relates to a battery pack, and more particularly, to a battery pack capable of replacing a unit cylindrical battery cell.

### [BACKGROUND ART]

In modern society, as portable devices such as a mobile phone, a notebook computer, a camcorder and a digital camera, as well as energy storage systems (ESS), has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very low self-discharge rate and high energy density.

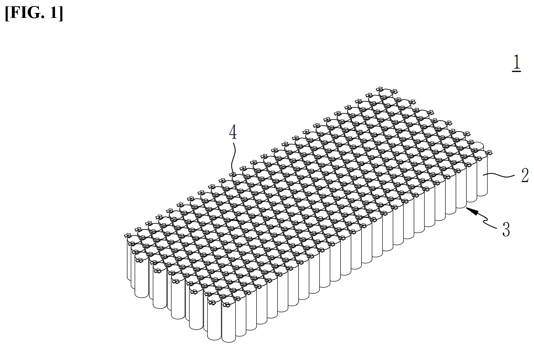

FIG. 1 is a perspective view showing a configuration in which cylindrical battery cells are stacked in a conventional battery pack.

Referring to FIG. 1, a conventional battery pack 1 has a configuration in which a plurality of cylindrical battery cells 2 are stacked together to form a battery cell stack 3. Wire bonder 4, which electrically connects each cylindrical battery cell 2 and a busbar (not shown), is disposed on the upper part of the cylindrical battery cell stack 3. The plurality of cylindrical battery cells 2 may be electrically connected to each other by the wire bonder 4 and at the same time, can be permanently fixed to a cell frame (not shown). Therefore, according to the conventional battery pack 1, replacement of some cylindrical battery cells 2 among the plurality of cylindrical battery cells 2 is impossible.

In a battery pack 1 including a plurality of cylindrical battery cells 2, if operation abnormality occurs in some cylindrical battery cells 2, it may be necessary to replace a specific cylindrical battery cell 2. However, in the conventional battery pack 1, as described above, it is impossible to replace only a specific cylindrical battery cell 2 that is operating abnormally, so that the entire battery cell stack 3 must be replaced. Accordingly, since the cylindrical battery cells 2 that are operating normally are also replaced, there is a problem that excessive financial and environmental costs occur at the time of the replacement.

### [DETAILED DESCRIPTION OF THE INVENTION]

### [Technical Problem]

It is an object of the present disclosure to provide a battery pack capable of replacing a unit cylindrical battery cell.

However, the technical objects to be solved by embodiments of the present disclosure are not limited to the above-described objects, and can be variously expanded within the scope of the technical idea included in the present disclosure.

### [Technical Solution]

A battery pack according to an aspect of the present disclosure comprises: a plurality of battery cells extending in one direction, a battery pack frame that forms an internal space for accommodating the plurality of battery cells, and is opened in an upper surface to accommodate the battery cells, and a pressing plate that is movable in an up-and-down direction in the internal space of the battery pack frame, and supports the plurality of battery cells, wherein the plurality of battery cells may be accommodated in parallel to each other in the internal space of the battery pack frame so that the longitudinal direction in which each of the plurality of battery cells extends is orthogonal to the up-and-down direction.

Two battery cells adjacent in a width direction orthogonal to the longitudinal direction among the plurality of battery cells may be accommodated in the internal space at heights different from each other.

The width direction length of the internal space may be smaller than the sum of the diameters of the battery cells located on an imaginary line which connects the centers of two battery cells adjacent in the width direction among the plurality of battery cells.

The pressing plate may comprise a position determination portion for determining the arrangement of the plurality of battery cells accommodated in the internal space.

The position determination portion may comprise at least one of an inclined portion formed on the pressing plate and a stepped portion protrusively formed on the pressing plate.

The battery pack may further comprise an elastic member disposed on a lower part of the pressing plate so as to press the pressing plate in a direction from the lower surface to the upper surface of the battery pack frame.

The battery pack may further comprise a position limitation member that allows the pressing plate to move between a fixed position spaced apart from the lower surface of the battery pack frame by a predetermined distance and the upper surface of the battery pack frame.

The position limitation member may be protruded from the battery pack frame into the internal space to limit downward movement of the pressing plate.

The battery pack frame comprises a front frame and a rear frame, each of which closes a direction orthogonal to an extension direction of the battery cell, and a pair of catching portions that extend toward each other from the respective ends of the front frame and the rear frame so as to close a portion of the opened upper surface.

A gap between the pair of catching portions may be larger than the diameter of the battery cell and smaller than twice the diameter of the battery cell.

The battery pack may further comprise at least one guide member extending along the up-and-down direction so as to guide up-and-down movement of the pressing plate.

The pressing plate may comprise at least one guide groove into which the at least one guide member is inserted.

The battery pack may further comprise a first busbar plate that comes into contact with first electrodes of the plurality of battery cells, and a second busbar plate that is disposed opposite to the first busbar plate and comes into contact with the second electrodes of the plurality of battery cells.

The first busbar plate may comprise a plurality of contact portions for coming into contact with the first electrode, and a plurality of electric conductive members having elasticity so as to press the plurality of contact portions toward the battery cell, respectively.

The second busbar plate may comprise a plurality of protrusion portions for coming into contact with the second electrode.

The battery pack further comprises a contact guide member coupled to the first busbar plate, wherein the contact guide member may comprise a plurality of ribs disposed in a space between the plurality of electric conductive members when coupled with the first busbar plate.

The battery pack further comprises a contact guide member coupled to the first busbar plate, wherein the contact guide member may comprise a plurality of through holes formed at positions corresponding to the plurality of contact portions so that the plurality of contact portions pass through when coupled with the first busbar plate.

The battery pack further comprises an interrupting member disposed between the plurality of battery cells and the first busbar plate in order to prevent contact between the plurality of battery cells and the plurality of contact portions, wherein the interrupting member may be removed when all of the plurality of battery cells are accommodated in the internal space of the battery pack frame.

The battery pack frame comprises an insertion groove extending along the up-and-down direction so as to guide movement of the interrupting member, and the interrupting member may be inserted into the insertion groove to be movable in the up-and-down direction.

The first busbar plate may be detachably coupled to the battery pack frame, and the first busbar plate may be separated from the battery pack frame at the time of replacement of at least one of the plurality of battery cells.

### [Advantageous Effects]

A battery pack according to embodiments of the present disclosure can replace only some of the battery cells without the need for replacing all of the battery cells when replacement of a unit cylindrical battery cell is required.

In addition, the battery pack according to embodiments of the present disclosure can accommodate the cylindrical battery cells in the battery pack frame in a space-efficient manner, thereby increasing the energy density of the battery pack.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view showing a configuration in which cylindrical battery cells are stacked in a conventional battery pack.
FIG. 2 is a perspective view showing a state in which a cylindrical battery cell is accommodated in a battery pack according to an embodiment of the present disclosure.
FIG. 3 is an exploded perspective view showing a cylindrical battery cell accommodated in the battery pack of FIG. 2.
FIG. 4 is an exploded perspective view showing a state before an electrode assembly included in the cylindrical battery cell of FIG. 3 is wound up.
FIG. 5 is an exploded perspective view of the battery pack shown in FIG. 2.
FIG. 6 is a transparent perspective view for explaining the process of replacing a battery cell in a battery pack according to an embodiment of the present disclosure.
FIG. 7 is a transmission perspective view showing a state in which an interrupting member is removed from FIG. 6.
FIG. 8 is a perspective view for explaining an example of a pressing plate by enlarging a section A of FIG. 6.
FIG. 9 is a side view for explaining another example of a pressing plate shown in FIG. 8.
FIG. 10 is an enlarged perspective view showing a section B of FIG. 6.
FIG. 11(a) is an exploded perspective view showing the first busbar plate and the contact guide member coupled thereto shown in FIG. 5, and FIG. 11(b) is a front view of FIG. 11(a).
FIG. 12(a) is an exploded perspective view showing another example of the contact guide member shown in FIG. 11, and FIG. 12(b) is a front view of FIG. 12(a).

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

In the embodiments above, expressions indicating directions such as "front," "rear," "left," "right," "up," and "down" have been used. These expressions are used only to facilitate the description, and may vary, for example, depending on the location of a target object or an observer.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Now, specific embodiments of the present disclosure will be described with reference to the accompanying drawings.

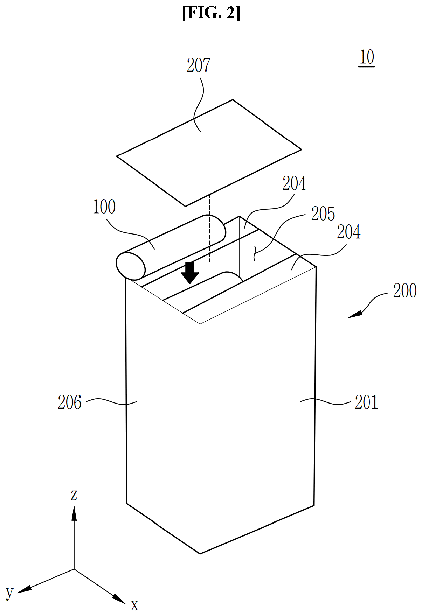

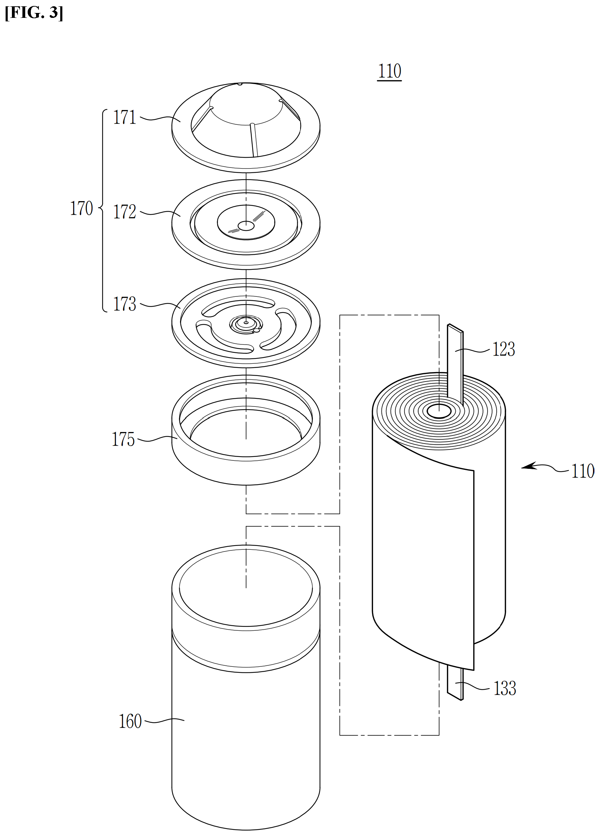

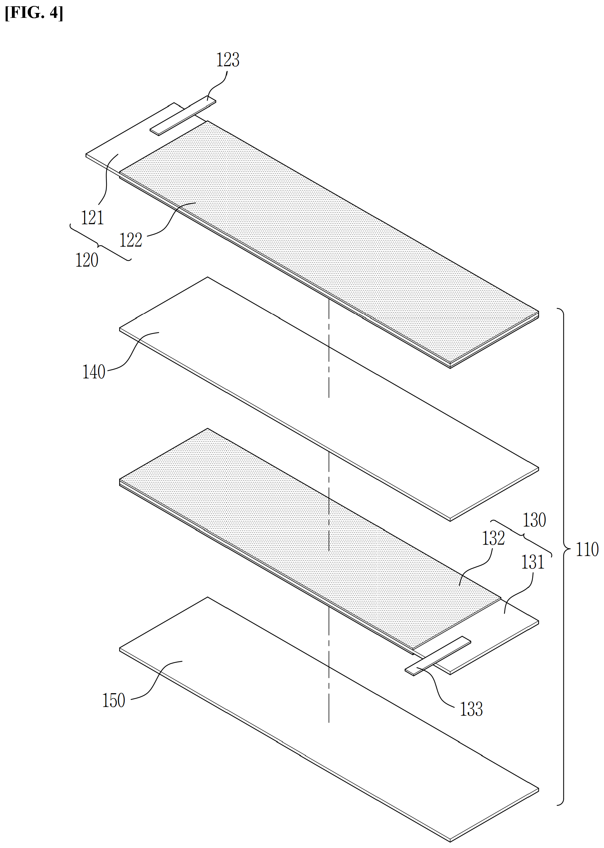

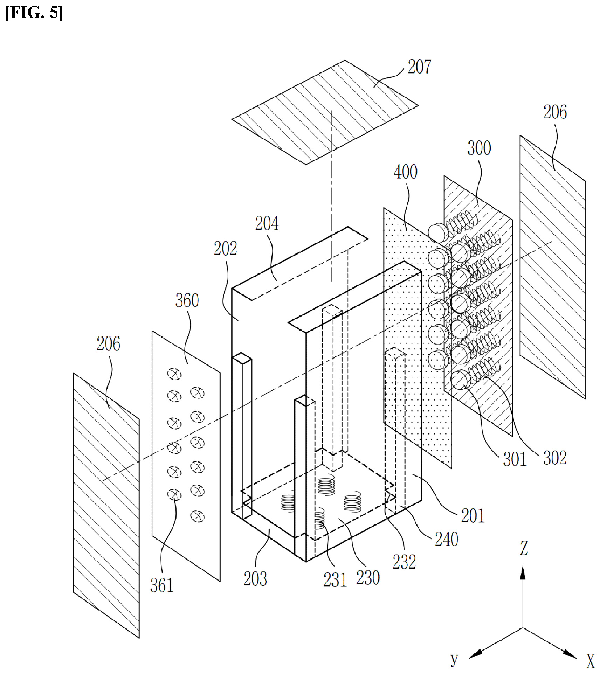

FIG. 2 is a perspective view showing a state in which a cylindrical battery cell is accommodated in a battery pack according to an embodiment of the present disclosure. FIG. 3 is an exploded perspective view showing a cylindrical battery cell accommodated in the battery pack of FIG. 2. FIG. 4 is an exploded perspective view showing a state before an electrode assembly included in the cylindrical battery cell of FIG. 3 is wound up. FIG. 5 is an exploded perspective view of the battery pack shown in FIG. 2.

Referring to FIGS. 2 to 5, a battery pack 10 according to an embodiment of the present disclosure may include a plurality of battery cells 100 extending in one direction, and a battery pack frame 200 in which the plurality of battery cells 100 are accommodated.

The battery cell 100 is formed in an elongated bar shape extending in one direction, and in the present embodiment, a cylindrical battery cell 100 is exemplified. However, for convenience of explanation, the cylindrical battery cell 100 will be referred to as a battery cell 100. A plurality of battery cells 100 may be accommodated inside a battery pack frame 200. Meanwhile, the details of the cylindrical battery cell 100 will be described later.

The battery pack frame 200 may include a front frame 201, a rear frame 202 facing the front frame 201, and a lower frame 203 connected to a lower end of the front frame 201 and a lower end of the rear frame 202, respectively, in order to form an internal space for accommodating a plurality of battery cells 100.

The front frame 201 and the rear frame 202 may cover the front and rear (x-axis direction and -x-axis direction) of the battery pack frame 200, and the lower frame 203 may cover the lower part (-z-axis direction) of the battery pack frame 200 so as to support a plurality of battery cells 100 accommodated inside the battery pack frame 200. Here, the lower frame 203 may be coupled to the front frame 201 and the rear frame 202 by a method such as welding. As another example, the front frame 201, the rear frame 202 and the lower frame 203 may be formed integrally. For example, the front frame 201, the rear frame 202, and the lower frame 203 may be U-shaped frames formed integrally.

The battery pack frame 200 according to an embodiment of the present disclosure may have a configuration in which an upper surface is opened to accommodate a plurality of battery cells 100. For example, a portion opened in the battery pack frame 200 may be an accommodation opening 205 for accommodating the battery cells 100.

However, the upper surface of the battery pack frame 200 may not be opened in its entire surface. For example, one part of area of the upper surface of the battery pack frame 200 may be closed, and the remaining area may be opened. For this purpose, the battery pack frame 200 may include a catching portion 204 extending from the respective ends of the front frame 201 and the rear frame 202 toward each other. For example, the catching portion 204 formed on the front frame 201 may extend in a direction (-x-axis direction) from the end of the front frame 201 toward the rear frame 202, and the catching portion 204 formed on the rear frame 202 may extend in a direction (x-axis direction) from the end of the rear frame 202 toward the front frame 201. Thereby, the accommodation opening 205 may be formed between the catching portion 204 formed in the front frame 201 and the catching portion 204 formed in the rear frame 202.

The side frame 206 may cover both side surface parts (in the y-axis direction and the -y-axis direction) of the battery pack frame 200, and the upper frame 207 may cover the upper part (in the z-axis direction) of the battery pack frame 200. The side frame 206 and the upper frame 207 may be plate-shaped members for covering both side surface parts and the upper part of the battery pack frame 200, respectively.

The side frame 206 and the upper frame 207 may be coupled to the corresponding front frame 201, rear frame 202, and lower frame 203, respectively. However, at least a part of the side frame 206 and the upper frame 207 may be detachably coupled. For example, as described below, the side frame 206 in the direction in which the first electrode 120 of the battery cell 100 is disposed may be detachably coupled to the front frame 201, the rear frame 202, and the lower frame 203, and the upper frame 207 may be detachably coupled to the front frame 201 and the rear frame 202. On the other hand, the side frame 206 in the direction where the second electrode 130 of the battery cell 100 is disposed may be coupled to the front frame 201, the rear frame 202, and the lower frame 203 by welding or the like.

Thereby, the battery pack frame 200 may form a structure that covers all directions in a state where a plurality of battery cells 100 are accommodated therein. Therefore, the battery pack frame 200 can physically protect the plurality of battery cells 100. For this purpose, the battery pack frame 200 may include a metal material having a predetermined strength.

Referring to FIGS. 3 and 4, a cylindrical battery cell 100 according to an embodiment of the present disclosure includes an electrode assembly 110, a cylindrical case 160 configured to accommodate the electrode assembly 110 and be opened in the upper part, and a cap assembly 170 coupled to the opened upper part of the cylindrical case 160.

First, the electrode assembly 110 according to the present embodiment may include a first electrode 120, a second electrode 130, and a separator 140. The first electrode 120, the second electrode 130, and the separator 140 may be wound together to form a jelly-roll type electrode assembly 110. The separator 140 may be interposed between the first electrode 120 and the second electrode 130. In addition, when wound into a jellyroll shape, it is preferable that a separator 150 is further disposed under the second electrode 130 to prevent the first electrode 120 and the second electrode 130 from coming into contact with each other.

The first electrode 120 includes a first electrode current collector 121 and a first active material layer 122 formed by applying an electrode active material onto the first electrode current collector 121. Specifically, the electrode active material is applied onto the first electrode collector 121 to form the first active material layer 122, and a first electrode tab 123 may be joined by a method such as welding to a portion of the first electrode current collector 121 where the electrode active material is not applied and thus the first electrode current collector 121 is exposed.

The second electrode 130 includes a second electrode current collector 131 and a second active material layer 132 formed by applying an electrode active material onto the second electrode current collector 131. Specifically, the electrode active material is applied onto the second electrode collector 131 to form the second active material layer 132, and a second electrode tab 133 may be joined by a method such as welding to a portion of the second electrode current collector 131 where the electrode active material is not applied and thus the second electrode current collector 131 is exposed.

At this time, the first electrode 120 may be a positive electrode, and the second electrode 130 may be a negative electrode. Accordingly, the first electrode tab 123 may be a positive electrode tab, and the second electrode tab 133 may be a negative electrode tab. Meanwhile, the first electrode tab 123 and the second electrode tab 133 may protrude in opposite directions with respect to the wound electrode assembly 110. As shown in FIG. 3, the first electrode tab 123 may be protruded in the direction in which the cap assembly 170 is located, and the second electrode tab 133 may be protruded toward the bottom part of the cylindrical case 160.

Meanwhile, the cylindrical case 160 is a structure that accommodates the electrode assembly 110 impregnated with an electrolyte solution, and may include a metal material.

The cap assembly 170 according to the present embodiment may include an upper end cap 171, a safety vent 172, and a current interrupt device (CID) 173. The upper end cap 171 and the safety vent 172 may form a structure that comes into close contact with each other. The safety vent 172 may be located on the current interrupt device 173, and may be electrically connected to the current interrupt device 173. Specifically, the center of the safety vent 172 and the center of the current interrupt device 173 may be physically and electrically connected to each other. A first electrode tab 123 protruding from the first electrode 120 may be connected to the lower end part of the current interrupt device 173.

The safety vent 172 is a thin film structure through which current flows, and its center can be formed to protrude downward, that is, in the direction where the current interrupt device 173 is located. The current interrupt device 173 is a plate member through which current flows, and may be formed with a plurality of through holes for discharging gas.

The upper end cap 171, the safety vent 172, the current interrupt device 173, and the first electrode tab 123 are sequentially connected, so that the upper end cap 171 may function as an electrode terminal that guides the electrical connection of the electrode assembly 110.

The sealing gasket 175 can increase the sealing force between the cap assembly 170 and the cylindrical case 160. That is, the sealing gasket 175 may be disposed between the cylindrical case 160 and the cap assembly 170 to seal the cylindrical battery cell 100. For example, the cylindrical battery cell 100 has the sealing gasket 175 disposed therein to prevent leakage of the internal electrolyte solution.

Referring again to FIGS. 2 and 5, the battery pack 10 may include a pressing plate 230 that is movable in an up-and-down direction inside the battery pack frame 200, an elastic member 231 disposed at a lower part of the pressing plate 230, and at least one guide member 240 extending along the up-and-down direction.

The pressing plate 230 may be a flat-shaped member that supports a plurality of battery cells 100 accommodated in the internal space. The pressing plate 230 is movable between the opened upper surface of the battery pack frame 200 and the lower surface facing the upper surface. For example, the pressing plate 230 may be located on the upper surface of the battery pack frame 200 before the battery cells 100 are accommodated in the internal space of the battery pack frame 200. In addition, the pressing plate 230 may move toward the lower surface of the battery pack frame 200 as the plurality of battery cells 100 are accommodated in the internal space.

The elastic member 231 is disposed at a lower part of the pressing plate 230 and thus can press the pressing plate 230 in a direction from the lower surface to the upper surface of the battery pack frame 200, i.e., in an upward direction. Thereby, even if a plurality of battery cells 100 are accommodated, the pressing plate 230 can support the plurality of battery cells 100 by the pressing force provided by the elastic member 231.

The elastic member 231 may be provided in a plurality. At least one elastic member 231 may have an elastic coefficient capable of supporting the load of all battery cells 100 that can be accommodated in the internal space. Thereby, even if only some battery cells 100 among all the battery cells 100 that can be accommodated in the internal space are accommodated in the internal space, the pressing plate 230 may support the battery cells 100 accommodated in the internal space at a predetermined position.

The guide member 240 may guide the up-and-down movement of the pressing plate 230. In the embodiment shown in FIG. 5, the guide member 240 is shown as a pillar-shaped member extending in an up-and-down direction on the four corners of the lower frame 203, but the shape, position, and number are not limited by those shown in FIG. 5. For example, two guide members 240 may be provided, and may be respectively disposed on the front frame 201 and the rear frame 202.

At this time, the pressing plate 230 may include at least one guide groove 232 into which at least one guide member 240 is inserted. The guide groove 232 may have a shape corresponding to the shape of the guide member 240. Accordingly, the guide member 240 may be inserted into the guide groove 232 and thus can guide up-and-down movement of the pressing plate 230 along the up-and-down direction in which the guide member 240 extends.

The guide member 240 may be inserted into the guide groove 232 of the pressing plate 230 to guide the up-and-down movement, thereby preventing the pressing plate 230 from being inclined to one side when the battery cell 100 is accommodated in the internal space of the battery pack frame. Therefore, when a plurality of battery cells 100 are accommodated, the contact between the busbar plate described below and the battery cell 100 may be made consistent at all times.

In addition, the battery pack 10 may include a first busbar plate 300 that comes into contact with the first electrodes 120 of the plurality of battery cells 100, a second busbar plate 360 that is disposed opposite to the first busbar plate 300 and comes into contact with the second electrodes 130 of the plurality of battery cells 100, and an interrupting member 400 that is disposed between the plurality of battery cells 100 and the first busbar plate 300.

The first busbar plate 300 may include a plurality of contact portions 301 for coming into contact with the first electrodes 120 of the battery cells 100, and a plurality of electric conductive members 302 that have elasticity to press the plurality of contact portions 301 toward the battery cells 100.

Both the plurality of contact portions 301 and the plurality of electric conductive members 302 may include a metal material having excellent electrical conductivity. For example, the plurality of contact portions 301 and the plurality of electric conductive members 302 may include silver (Ag), copper (Cu), gold (Au), aluminum (Al), iron (Fe), or an alloy of one or more of these.

In particular, the plurality of electric conductive members 302 may be a material having excellent electrical conductivity and elasticity. When the battery cell 100 is accommodated in the internal space of the battery pack frame 200, the plurality of contact portions 301 may be pressed toward the battery cells 100 by the plurality of electric conductive members 302. Thereby, the plurality of contact portions 301 may stably contact the first electrode 120 of each battery cell 100. At the same time, the plurality of contact portions 301 can press each battery cell 100 by the plurality of electric conductive members 302, and the second electrode of each battery cell 100 can stably contact the plurality of protrusion portions 361 of the second busbar plate 360 described below.

The second busbar plate 360 may include a plurality of protrusion portions 361 for contacting the second electrode 130 of the battery cell 100. The plurality of protrusion portions 361 may include a metal material having excellent electrical conductivity. For example, the plurality of protrusion portions 361 may include silver (Ag), copper (Cu), gold (Au), aluminum (Al), iron (Fe), or an alloy of one or more of these.

In addition, both the first busbar plate 300 and the second busbar plate 360 may include a metal material having excellent electrical conductivity. For example, the first busbar plate 300 and the second busbar plate 360 may include silver (Ag), copper (Cu), gold (Au), aluminum (Al), iron (Fe), or an alloy of one or more of these.

The first busbar plate 300 and the second busbar plate 360 may each be a plate made of metal. As another example, the first busbar plate 300 and the second busbar plate 360 may each have electrical wiring formed on a plate made of a member (e.g., plastic) having electrical insulating properties. That is, the respective electric conductive members 302 of the first busbar plate 300 may be electrically connected to each other, and the respective protrusion portions 361 of the second busbar plate 360 may be electrically connected to each other. At this time, the electrical wiring may be formed of a metal wire or metal pattern having excellent electrical conductivity, but is not limited by that described above, and may be modified or changed in various different ways according to the environment in which the present invention is realized.

The interrupting member 400 may be disposed between the plurality of battery cells 100 and the first busbar plate 300 to prevent contact between the plurality of battery cells 100 and the plurality of contact portions 301. The interrupting member 400 may have electrical insulation properties. Thereby, electrical connection between the plurality of battery cells 100 and the first busbar plate 300 may be electrically interrupted by the interrupting member 400. As described below, the interrupting member 400 may be removed from the battery pack frame 200 when all of the plurality of battery cells 100 are accommodated in the internal space of the battery pack frame 200.

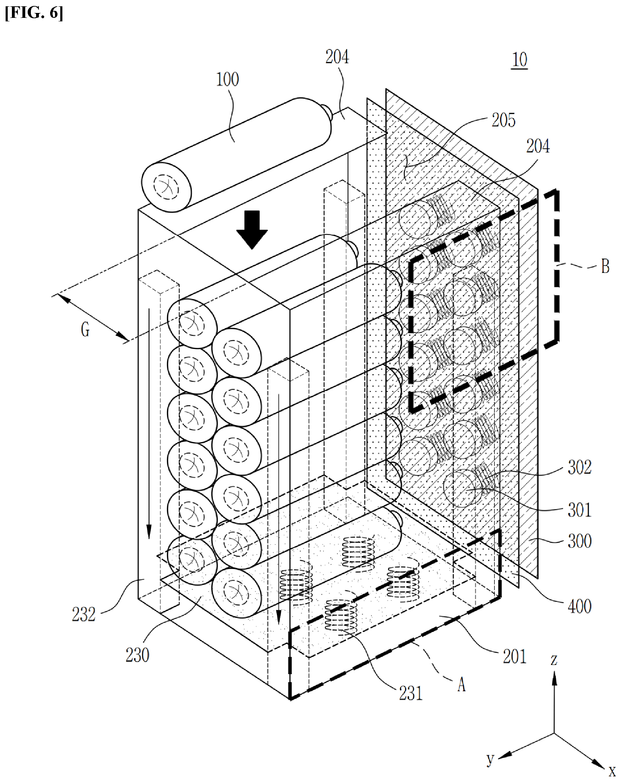

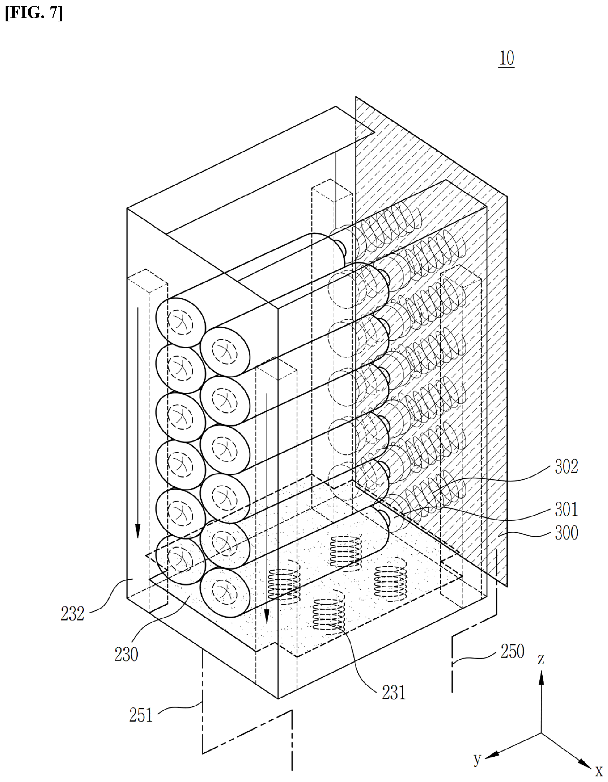

FIG. 6 is a transparent perspective view for explaining the process of replacing a battery cell in a battery pack according to an embodiment of the present disclosure. FIG. 7 is a transmission perspective view showing a state in which an interrupting member is removed from FIG. 6.

Referring to FIGS. 6 and 7, the plurality of battery cells 100 can be accommodated in parallel to each other in the internal space of the battery pack frame 200 so that the longitudinal direction in which each of them extends is orthogonal to the up-and-down direction. More specifically, when the direction in which the plurality of battery cells 100 accommodated in the internal space of the battery pack frame 200 extends is referred to as the longitudinal direction (y-axis direction), the direction orthogonal to the longitudinal direction is referred to as the width direction (x-axis direction), and the direction orthogonal to the longitudinal direction and the width direction is referred to as the up-and-down direction (z-axis direction), two battery cells 100 adjacent to each other in the width direction among the plurality of battery cells 100 may be accommodated in the internal space at heights different from each other. Meanwhile, the method in which the plurality of battery cells 100 are accommodated and arranged in the internal space of the battery pack frame 200 will be described later.

As described above, the battery pack frame 200 may include a pair of catching portions 204 extending toward each other from the respective ends of the front frame 201 and the rear frame 202 so as to close a portion of the opened upper surface, and an accommodation opening 205 opened between the pair of catching portions 204. The gap G between the pair of catching portions 204 may be larger than the diameter of the battery cell 100 and smaller than twice the diameter of the battery cell 100.

Therefore, since the gap G between the pair of catching portions 204 is larger than the diameter of the battery cell 100, the battery cell 100 can be inserted into the internal space of the battery pack frame 200 through the accommodation opening 205. Further, since the pair of catching portions 204 extend toward each other from the respective ends of the front frame 201 and the rear frame 202, the battery cell 100 can be prevented from being discharged to the outside of the battery pack frame 200 by the catching portions 204 even if the battery cell 100 is pressed upward by the pressing plate 230 in a state of being accommodated in the internal space of the battery pack frame 200.

As described above, the interrupting member 400 can be removed when all of the plurality of battery cells 100 are accommodated in the internal space of the battery pack frame 200. Meanwhile, the method in which the interrupting member 400 is removed from the battery pack frame 200 will be described later.

As shown in an embodiment of FIG. 6, the interrupting member 400 may be disposed between the plurality of battery cells 100 and the first busbar plate 300 while the plurality of battery cells 100 are accommodated in the internal space of the battery pack frame 200. When the interrupting member 400 is disposed between the plurality of battery cells 100 and the first busbar plate 300, the plurality of electric conductive members 302 may be in a state of being compressed by the interrupting member 400, and the plurality of contact portions 301 may be electrically insulated from the first electrodes 120 of the plurality of battery cells 100 by the interrupting member 400. Therefore, in the process of accommodating a plurality of battery cells 100 in the internal space of the battery pack frame 200, the plurality of contact portions 301 may interfere with the plurality of battery cells 100, thereby preventing occurrence of problems such as misalignment of the plurality of battery cells 100.

As shown in an embodiment of FIG. 7, when the interrupting member 400 is removed, the plurality of electric conductive members 302 compressed by the interrupting member 400 are released from the compressed state, and the plurality of contact portions 301 may be pressed toward the battery cell 100 by the plurality of electric conductive members 302. The first electrode 120 and the second electrode 130 of each battery cell 100 can be stably contacted with the plurality of contact portions 301 of the first busbar plate 300 and the plurality of protrusion portions 361 of the second busbar plate 360 through the plurality of electric conductive members 302, respectively.

As the interrupting member 400 is removed, the first busbar plate 300 and the second busbar plate 360 can be electrically connected to a plurality of battery cells 100, respectively. Further, the first busbar plate 300 may be electrically connected to the outside through the first wiring 250, and the second busbar plate 360 may be electrically connected to the outside through the second wiring 251.

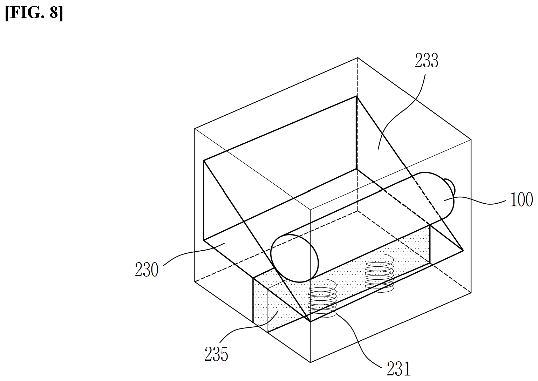

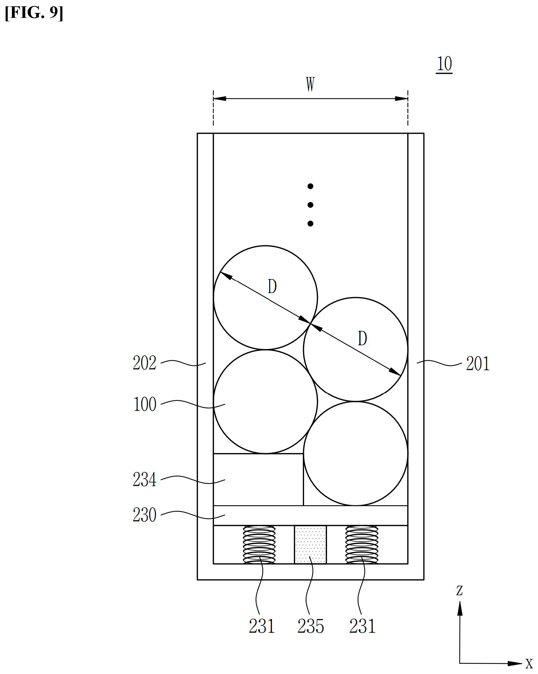

FIG. 8 is a perspective view for explaining an example of a pressing plate by enlarging a section A of FIG. 6. FIG. 9 is a side view for explaining another example of a pressing plate shown in FIG. 8.

Referring to FIGS. 8 and 9, the pressing plate 230 may include position determination portions 233, 234 for determining the arrangement of the plurality of battery cells 100 accommodated in the internal space of the battery pack frame 200.

In an embodiment shown in FIG. 8, the position determination portion may be formed in the form of an inclined portion 233 on the pressing plate 230. The inclined portion 233 may be inclined to determine the position of the first battery cell 100 accommodated in the internal space of the battery pack frame 200. For example, in order for the first battery cell 100 accommodated in the internal space of the battery pack frame 200 to be positioned in the x-axis direction, the inclined portion 233 may have a shape that is inclined downward from the -x-axis to the x-axis direction. Meanwhile, the inclination direction and the inclination angle of the inclined portion 233 may be modified or changed in various different ways according to the formation positions of the contact portion 301 and the protrusion portion 361 in the first busbar plate 300 and the second busbar plate 360, the size of the battery cell 100, and the like.

Further, In an embodiment shown in FIG. 9, the position determination portion may be formed in the form of a stepped portion 234 that is protruded on the pressing plate 230. The stepped portion 234 may be formed to protrude by a predetermined height on the pressing plate 230 in order to determine the position of the first battery cell 100 accommodated in the internal space of the battery pack frame 200. For example, in order for the first battery cell 100 accommodated in the internal space of the battery pack frame 200 to be positioned in the x-axis direction, the stepped portion 234 may have a form protruding upward in the -x direction. Meanwhile, the direction and height in which the stepped portion 234 is formed may be modified or changed in various different ways according to the formation positions of the contact portion 301 and the protrusion portion 361 in the first busbar plate 300 and the second busbar plate 360, the size of the battery cell 100, and the like.

The position of the first battery cell 100 accommodated in the internal space of the battery pack frame 200 is determined through the aforementioned position determination portions 233, 234, and the battery cell 100 accommodated thereafter can be positioned adjacent to the first accommodated battery cell 100. At this time, the battery cell 100 firstly accommodated and the battery cell 100 accommodated thereafter can be accommodated in the internal space of the battery pack frame 200 at different heights by the position determination portions 233, 234. After that, a plurality of battery cells 100 may be sequentially accommodated in the internal space of the battery pack frame 200 and sequentially stacked on the upper part of the previously accommodated battery cells 100.

Accordingly, As shown in an embodiment of FIG. 9, the width direction length of the internal space of the battery pack frame 200 may be smaller than the sum of the diameters of the battery cells 100 located on an imaginary line which connects the centers of two adjacent battery cells 100 in the width direction among the plurality of battery cells 100. In this manner, since the plurality of battery cells 100 accommodated in the internal space of the battery pack frame 200 are disposed so that the two adjacent battery cells 100 are disposed to cross each other in the width direction, the ratio of the volume occupied by the plurality of battery cells 100 in the volume of the internal space of the battery pack frame 200 can be increased. Therefore, the battery pack 10 according to the embodiments of the present disclosure can accommodate the cylindrical battery cells 100 in the battery pack frame 200 in a space-efficient manner, thereby increasing the energy density of the battery pack 10.

Further, the battery pack 10 may include a position limitation member 235 that allows the pressing plate 230 to move between a fixed position spaced apart from the lower surface of the battery pack frame 200 by a predetermined distance and the upper surface of the battery pack frame 200. In an embodiment shown in FIGS. 8 and 9, the position limitation member 235 may protrude from the lower frame 203 of the battery pack frame 200 into the internal space to limit the downward movement of the pressing plate 230. Therefore, the accommodation height of the battery cell 100 accommodated in the internal space of the battery pack frame 200 may be determined according to the protruding height of the position limitation member 235. At this time, the accommodation height of the battery cell 100 can be modified or changed in various different ways according to the formation positions of the contact portion 301 and the protrusion portion 361 in the first busbar plate 300 and the second busbar plate 360, the size of the battery cell 100, and the like.

However, , the shape and structure of the position limitation member are not limited to those described above. For example, since the upward movement of the pressing plate 230 may be limited by the catching portion 204, the catching portion 204 may be a position limitation member that limits the upward movement. Further, the position limitation member may be formed on the guide member 240 to limit the up-and-down movement of the pressing plate 230. For example, the position limitation member may be protruded from a predetermined position of the guide member 240, thereby limiting the upward and downward movement of the pressing plate 230. That is, the formation and structure of the position limitation member are not limited by those described above, and may be modified or changed in various different ways according to the environment in which the present invention is realized.

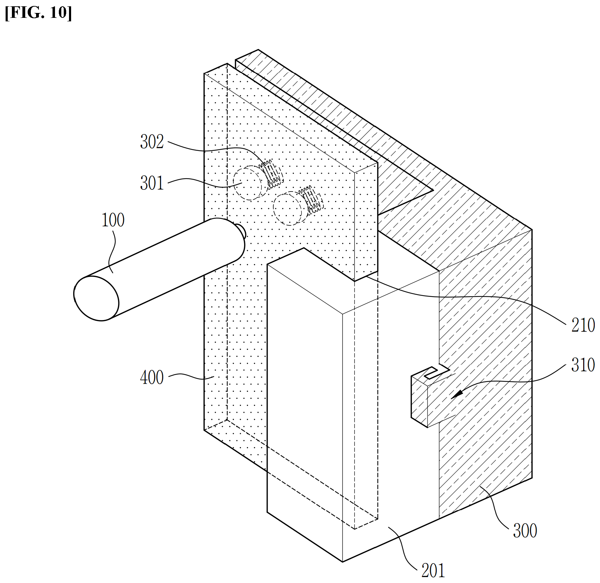

FIG. 10 is an enlarged perspective view showing a section B of FIG. 6.

Referring to FIG. 10, the battery pack frame 200 may include an insertion groove 210 extending in the up-and-down direction to guide movement of the interrupting member 400. The interrupting member 400 may be inserted into the insertion groove 210 to be movable in the up-and-down direction. Therefore, when all of the plurality of battery cells 100 are accommodated in the internal space of the battery pack frame 200, the interrupting member 400 may be moved upward along the insertion groove 210 and removed from the battery pack frame 200. Conversely, the interrupting member 400 may be inserted into the insertion groove 210 and moved downward along the insertion groove 210 to be coupled to the battery pack frame 200.

The first busbar plate 300 may be detachably coupled to the battery pack frame 200. For example, the first busbar plate 300 may be detached from the battery pack frame 200 at the time of replacement of at least one of the plurality of battery cells 100. Specifically, the first busbar plate 300 may include a coupling unit 310 that is fixed to the front frame 201. As the coupling unit 310 is fixed to the front frame 201, the first busbar plate 300 may be detachably coupled to the front frame 201. For example, the coupling unit 310 may have a hook structure. The first busbar plate 300 may be coupled to the front frame 201 in such a way that a hook portion extending from the first busbar plate 300 is caught on the front frame 201. However, the coupling method of the coupling unit 310 is not limited by those described above, and may be modified or changed in various different ways according to the environment in which the present invention is realized.

Looking at the method for replacing a battery cell 100 in a battery pack 10 according to embodiments of the present disclosure, first, the first busbar plate 300 is removed from the battery pack frame 200. Next, a battery cell 100 that needs to be replaced is removed from the plurality of battery cells 100 accommodated in the battery pack frame 200. Next, the interrupting member 400 may be inserted into the insertion groove 210 to be coupled to the battery pack frame 200. Next, the first busbar plate 300 is coupled to the battery pack frame 200, and then a new battery cell 100 is accommodated in the internal space of the battery pack frame 200. Finally, the interrupting member 400 is removed from the battery pack frame 200, thereby allowing replacement of the battery cell 100. Meanwhile, in the above-described method for replacing the battery cell 100, the attachment/detachment of the side frame 206 and the upper frame 207 is omitted, and the attachment/detachment of the side frame 206 and the upper frame 207 can be appropriately performed according to the environment in which the present disclosure is realized.

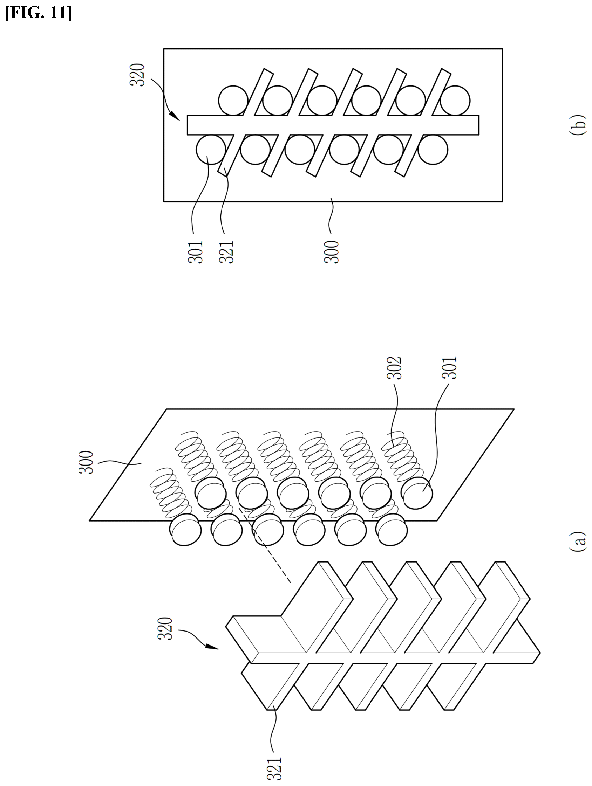

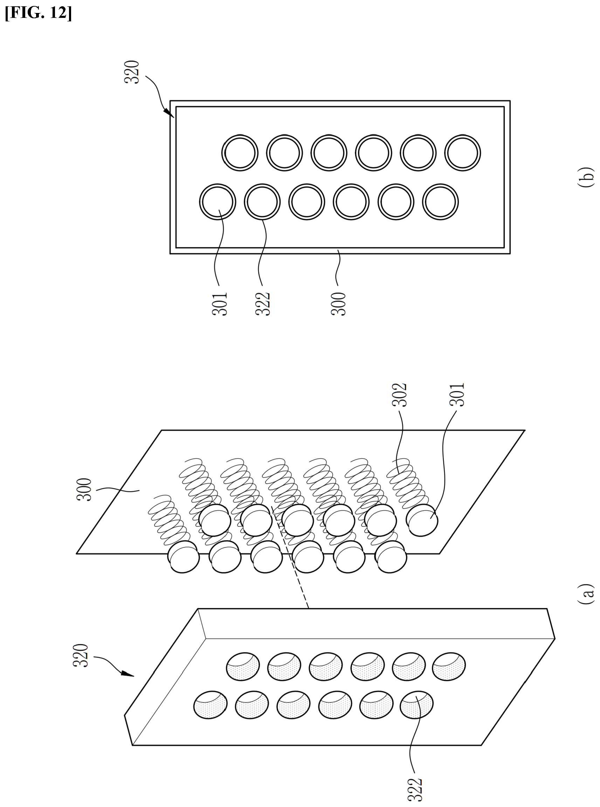

FIG. 11(a) is an exploded perspective view showing the first busbar plate and the contact guide member coupled thereto shown in FIG. 5, and FIG. 11(b) is a front view of FIG. 11(a). FIG. 12(a) is an exploded perspective view showing another example of the contact guide member shown in FIG. 11, and FIG. 12(b) is a front view of FIG. 12(a).

Referring to FIGS. 11 and 12, the battery pack 10 may include a contact guide member 240 coupled to the first busbar plate 300.

In an embodiment shown in FIG. 11, the contact guide member 240 may include a plurality of ribs 321 disposed in a space between the plurality of electric conductive members 302 when coupled with the first busbar plate 300. The plurality of ribs 321 may be inclined downward in one direction, corresponding to the position where the plurality of electric conductive members 302 are coupled with the first busbar plate 300.

In a state where the interrupting member 400 is coupled to the battery pack frame 200, the plurality of contact portions 301 press the interrupting member 400. Therefore, when the interrupting member 400 is removed from the battery pack frame 200, the plurality of contact portions 301 also receive a force in the direction in which the interrupting member 400 is removed due to friction between the interrupting member 400 and the plurality of contact portions 301, thereby causing the plurality of contact portions 301 and the plurality of electric conductive members 302 to swing. Such swinging of the plurality of contact portions 301 and the plurality of electric conductive members 302 may cause problems such as occurrence of electrical connection failure. Therefore, the plurality of ribs 321 are disposed in the space between the plurality of electric conductive members 302, thereby being able to reduce swinging of the plurality of contact portions 301 and the plurality of electric conductive members 302.

In an embodiment shown in FIG. 12, the contact guide member 240 may include a plurality of through holes 322 formed at positions corresponding to the plurality of contact portions 301 so that the plurality of contact portions 301 may pass through the plurality of through holes 322 when coupled with the first busbar plate 300. As shown in FIG. 12(b), when the contact guide member 240 is coupled with the first busbar plate 300, the plurality of contact portions 301 may pass through the plurality of through holes 322, so that the contact guide member 240 may wrap around the plurality of electric conductive members 302. In particular, when the plurality of electric conductive members 302 are compressed by the interrupting member 400, at least a portion of the plurality of contact portions 301 may be located inside the plurality of through holes 322. Thereby, the contact guide member 240 can further reduce swinging of the plurality of contact portions 301 and the plurality of electric conductive members 302.

On the other hand, the battery pack according to specific embodiments of the present disclosure can be applied to various devices. Such devices can be applied to various transportation vehicles such as electric bicycles, electric vehicles, and hybrids, and/or an energy storage system (ESS). However, the present disclosure is not limited thereto, and can be applied to various devices capable of using a battery pack, which also falls within the scope of the present disclosure.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

10: battery pack
100: cylindrical battery cell
200: battery pack frame
201: front frame
202: rear frame
203: lower frame
204: catching portion
205: accommodation opening
206: side frame
207: upper frame
210: insertion groove
230: pressing plate
231: elastic member
232: guide groove
233: inclined portion
234: stepped portion
235: position limitation member
240: guide member
300: first busbar plate
301: plurality of contact portions
302: plurality of electric conductive members
310: coupling unit
320: contact guide member
321: plurality of ribs
322: plurality of through holes
360: second busbar plate
361: plurality of protrusion portions
400: interrupting member

## Claims

1. A battery pack comprising:
a plurality of battery cells extending in one direction;
a battery pack frame that forms an internal space for accommodating the plurality of battery cells, and is opened in an upper surface to accommodate the battery cells
a pressing plate that is movable in an up-and-down direction in the internal space of the battery pack frame, and supports the plurality of battery cells,
wherein the plurality of battery cells are accommodated in parallel to each other in the internal space of the battery pack frame so that the longitudinal direction in which each of the plurality of battery cells extends is orthogonal to the up-and-down direction.

2. The battery pack according to claim 1, wherein:
two battery cells adjacent in a width direction orthogonal to the longitudinal direction among the plurality of battery cells are accommodated in the internal space at heights different from each other.

3. The battery pack according to claim 2, wherein:
the width direction length of the internal space is smaller than the sum of the diameters of the battery cells located on an imaginary line which connects the centers of two battery cells adjacent in the width direction among the plurality of battery cells.

4. The battery pack according to claim 2, wherein:
the pressing plate comprises a position determination portion for determining the arrangement of the plurality of battery cells accommodated in the internal space.

5. The battery pack according to claim 4, wherein:
the position determination portion comprises at least one of an inclined portion formed on the pressing plate and a stepped portion protrusively formed on the pressing plate.

6. The battery pack according to claim 1,
further comprising an elastic member disposed on a lower part of the pressing plate so as to press the pressing plate in a direction from the lower surface to the upper surface of the battery pack frame.

7. The battery pack according to claim 6,
further comprising a position limitation member that allows the pressing plate to move between a fixed position spaced apart from the lower surface of the battery pack frame by a predetermined distance and the upper surface of the battery pack frame.

8. The battery pack according to claim 7, wherein:
the position limitation member is protruded from the battery pack frame into the internal space to limit downward movement of the pressing plate.

9. The battery pack according to claim 1, wherein:
the battery pack frame comprises a front frame and a rear frame, each of which closes a direction orthogonal to an extension direction of the battery cell, and
a pair of catching portions that extend toward each other from the respective ends of the front frame and the rear frame so as to close a portion of the opened upper surface.

10. The battery pack according to claim 9, wherein:
a gap between the pair of catching portions is larger than the diameter of the battery cell and smaller than twice the diameter of the battery cell.

11. The battery pack according to claim 1,
further comprising at least one guide member extending along the up-and-down direction so as to guide up-and-down movement of the pressing plate.

12. The battery pack according to claim 11, wherein:
the pressing plate comprises at least one guide groove into which the at least one guide member is inserted.

13. The battery pack according to claim 1, further comprising:
a first busbar plate that comes into contact with first electrodes of the plurality of battery cells, and
a second busbar plate that is disposed opposite to the first busbar plate and comes into contact with the second electrodes of the plurality of battery cells.

14. The battery pack according to claim 13, wherein:
the first busbar plate comprises:
a plurality of contact portions for coming into contact with the first electrode; and
a plurality of electric conductive members having elasticity so as to press the plurality of contact portions toward the battery cell, respectively.

15. The battery pack according to claim 14, wherein:
the second busbar plate comprises a plurality of protrusion portions for coming into contact with the second electrode.

16. The battery pack according to claim 14,
further comprising a contact guide member coupled to the first busbar plate,
wherein the contact guide member comprises a plurality of ribs disposed in a space between the plurality of electric conductive members when coupled with the first busbar plate.

17. The battery pack according to claim 14,
further comprising a contact guide member coupled to the first busbar plate,
wherein the contact guide member comprises a plurality of through holes formed at positions corresponding to the plurality of contact portions so that the plurality of contact portions pass through when coupled with the first busbar plate.

18. The battery pack according to claim 13,
further comprising an interrupting member disposed between the plurality of battery cells and the first busbar plate in order to prevent contact between the plurality of battery cells and the plurality of contact portions,
wherein the interrupting member is removed when all of the plurality of battery cells are accommodated in the internal space of the battery pack frame.

19. The battery pack according to claim 18, wherein:
the battery pack frame comprises an insertion groove extending along the up-and-down direction so as to guide movement of the interrupting member, and
the interrupting member is inserted into the insertion groove to be movable in the up-and-down direction.

20. The battery pack according to claim 13, wherein:
the first busbar plate is detachably coupled to the battery pack frame, and
the first busbar plate is separated from the battery pack frame at the time of replacement of at least one of the plurality of battery cells.
